# EUROPÄISCHE PATENTSCHRIFT

(11) **EP 0 705 402 B1**
(45) Veröffentlichungstag und Bekanntmachung des Hinweises auf die Patenterteilung: **29.08.2001**
(21) Anmeldenummer: 95917942.5
(22) Anmeldetag: 20.04.1995
(51) Int. Cl.: F16K 3/18

(54) **PLATTENSCHIEBER**
GATE VALVE
ROBINET-VANNE A SIEGES PARALLELES

(30) Priorität: 22.04.1994 DE 4414176
(43) Veröffentlichungstag der Anmeldung: 10.04.1996
(73) Patentinhaber: Zimmermann & Jansen GmbH, D-52355 Düren (DE)
(72) Erfinder: KRIEG, Uwe, D-52372 Kreuzau (DE); MARX, Norbert, D-52355 Düren (DE); ZOSEL, Dietrich, D-52351 Düren (DE)
(74) Vertreter: Popp, Eugen, Dr.
(86) Internationale Anmeldenummer: EP9501488
(87) Internationale Veröffentlichungsnummer: WO9529356

(56) Entgegenhaltungen:
- DE-A- 1 900 538
- DE-C- 720 599
- GB-A- 976 291
- US-A- 3 596 874
- US-A- 3 684 239

## Beschreibung

Die Erfindung betrifft einen Plattenschieber mit einem einen Eintritts- und einen Austrittsstutzen aufweisenden Gehäuse nach dem Oberbegriff von Patentanspruch 1.

Ein derartiger Plattenschieber ist allgemein bekannt, insbesondere in Form eine sogenannten Leitrohrschiebers. Es wird diesbezüglich auf die EP 0 326 787 B1, DE 40 11 274 C und US 3,596,874 verwiesen.

Ziel der bekannten Konstruktionen ist es, daß der Plattenschieber unter Beibehaltung einer guten Dichtfunktion in seiner Schließstellung während der Öffnungs- und Schließbewegung des Schiebers nur geringen Reibungskräften an den Sitz- und Dichtflächen unterliegt. Dieses Ziel wird bei dem Leitrohrschieber gemäß der DE 40 11 274 C nur teilweise erreicht, nämlich nur im Bereich des Leitrohrs. Die Spreizbewegung der Verschlußplatten erfolgt rein mechanisch, nämlich unter Verwendung des sogenannten "Keil-im-Keil"-Prinzips. Dabei stellt sich das Problem, daß beim Öffnen der Armatur eine definierte Rückstellung der beiden Verschlußplatten mittels gesonderter Tellerfederpakete erfolgt. Dementsprechend entsteht eine unkontrollierte Haftreibung zwischen den Dichtflächen der Verschlußplatten einerseits und den Gehäusedichtsitzen sowie den sogenannten Leitplatten andererseits mit der Folge einer entsprechend hohen Abrasionsbelastung der Dichtflächen. Außerdem sind in der Betätigungsstange integrierte Tellerfederpakete erforderlich, um den "Keil-im-Keil"-Mechanismus zu beherrschen.

Die Konstruktion nach der EP 0 326 787 B1 ist äußerst aufwendig und darüber hinaus sehr schwer gebaut. Die Verschlußplatten füllen praktisch den gesamten Spalt zwischen den Gehäusedichtsitzen aus.

Der ferner aus der US 3,596,874 bekannte Plattenschieber dient zum gasdichten Abtrennen einer oder mehrerer Sektionen eines Durchgangs oder Rauchabzuges. Hierzu weist der Plattenschieber ein Gehäuse und einen darin bewegbaren Schieber mit zwei parallel angeordneten Verschlußplatten auf. Der Schieber umfaßt eine Druckkammer zwischen den beiden Verschlußplatten, die durch Einleiten eines Druckmittels mit Druck beaufschlagbar ist, so daß sich nachgiebige Dichtflächen des Schiebers axial nach außen wölben unter dichter Anlage an zugeordneten Sitzflächen des Gehäuses in Schließstellung des Schiebers. Hierdurch wird einerseits eine gute Dichtfunktion erzielt und andererseits ist der Schieber leicht bewegbar, wenn aus der Druckkammer das Druckmittel abgelassen wird. Durch eine Versteifung des Schiebers können relativ dünnwandige Verschlußplatten verwendet werden, die sich im Extremfall unter Einwirkung des Druckmittels axial verformen unter entsprechender Anlage am Gehäusedichtsitz in Schließstellung des Schiebers. Bei dieser Leichtbauweise ist es auch möglich, die Dichtkraft durch Absenkung des Druckmitteldrucks so zu reduzieren, daß sich der Schieber auch bei größerer Dimensionierung mit relativ kleinem Antrieb verfahren läßt. Die dünnwandige Konstruktion erlaubt schließlich eine Anpassung des Schiebers an Gehäuse- bzw. Gehäusedichtsitzverformungen. Eine unzulässige Verformung, insbesondere Eindellung in Schließstellung des Schiebers wird durch im Zentralbereich der Verschlußplatten wirksamen Versteifungselemente verhindert.

Als Versteifungselement dient beispielsweise ein zwischen den Verschlußplatten angeordneter Versteifungsring oder -rahmen, der sich radial innerhalb der beiden Verschlußplatten erstreckt. Der Versteifungsring oder -rahmen begrenzt zugleich die maximale Annäherung der beiden Verschlußplatten bei Öffnung der Armatur.

Der Versteifungsring oder -rahmen ist mit beiden Verschlußplatten fest verbunden, insbesondere verschweißt, so daß ein den Dichtflächen zugeordneter Ringraum einerseits und ein innerhalb des Versteifungsrings ausgebildeter Raum andererseits, der nicht in Fluidverbindung mit dem äußeren Ringraum steht, gebildet ist. Nur der äußere Ringraum, der den Dichtflächen der beiden Verschlußplatten zugeordnet ist, steht mit einer Druckmittelquelle in Verbindung und ist dementsprechend druckmittelbeaufschlagbar mit der Folge einer axialen Verformung, nämlich Ausbauchung der Dichtflächen in Schließstellung des Schiebers, wodurch die Dichtflächen gegen die Sitzflächen des Gehäuses preßbar sind.

Bei den Varianten mit zentralen Versteifungsplatten oder nur an der Innenseite einer Verschlußplatte befestigten Versteifungselementen sind die beiden Verschlußplatten insgesamt unter der Einwirkung eines Druckmittels in Axialrichtung relativ zueinander bewegbar, wobei der Raum zwischen den beiden Verschlußplatten durch sich längs des äußeren Umfangs erstreckende Kompensatoren fluiddicht gegenüber der Umgebung begrenzt ist. Ein solcher Kompensator kann beispielsweise ein Blechstreifen sein, der längs seiner beiden Umfangsränder mit den beiden Verschlußplatten fluiddicht verschweißt ist, wobei eine Druckmittelleitung durch den Blechstreifen hindurch in den Raum zwischen den beiden Verschlußplatten mündet.

Allen Schiebern ist gemeinsam, daß erhebliche Spannungen insbesondere in den Randbereichen des Schiebers auftreten können. Insbesondere wenn der aus der US 3,596,874 bekannte Plattenschieber zusätzlich mit einem Leitrohr versehen würde, ließen sich besonders große Spannungen am Übergang zwischen dem Leitrohr und dem Absperrteil des Schiebers nicht vermeiden.

Aufgabe der vorliegenden Erfindung ist es daher, den aus der US 3,596,874 bekannten gattungsbildenden Plattenschieber als Leitrohrschieber weiterzubilden, und zwar derart, daß Spannungen insbesondere im Übergangsbereich zwischen Leitrohr und Absperrteil des Schiebers vermieden werden.

Diese Aufgabe wird erfindungsgemäß durch einen Plattenschieber mit den Merkmalen von Patentanspruch 1 gelöst.

Kennzeichengemäß umfassen die Verschlußplatten des Schiebers zusätzlich ein Leitrohr (= Leitrohrschieber oder auch Rohrbrückenschieber genannt), wobei sich um das Leitrohr herum erstreckende Randbereiche der Verschlußplatten in Offenstellung des Schiebers mit Sitzflächen des Gehäuses korrespondierende Dichtringe definieren. Die Dichtringe werden unter Einwirkung von Druckmittel axial nach außen gewölbt und gegen die Dichtsitze des Gehäuses gepreßt. Der den Dichtringen zugeordnete Druckmittelraum ist mit einem den Dichtflächen der beiden Verschlußplatten zugeordneten Druckmittelraum fluidverbunden. Die äußere Begrenzungswand erstreckt sich auch um den den Leitrohrdichtringen zugeordneten Druckmittelraum herum und weist insgesamt eine brillenartige Umfangskontur auf. Insbesondere aufgrund dieser brillenartigen Umfangskontur werden Spannungen am Rand des Übergangsbereiches zwischen Leitrohr und Absperrteil sowie im Eckbereich vermieden. Eine Abrasion des Schiebers und insbesondere der Dichtflächen wird dadurch ebenfalls verringert.

Eine einfache Konstruktion zeichnet sich dadurch aus, daß die beiden Verschlußplatten des Schiebers sowie die beiden Dichtringe des Leitrohrs jeweils integral miteinander verbunden sind, d. h. integrale Plattenteile bilden, wobei der Raum zwischen den beiden Plattenteilen jeweils randseitig gegenüber der Umgebung fluiddicht verschlossen ist, insbesondere mittels eines Kompensators der vorgenannten Art. Die Verschlußplatten und Dichtringe bilden dann Teil eines fluiddicht verschlossenen Kastens, dessen variable Höhe durch die erwähnten Kompensatoren bestimmt ist. Die Ecken des erwähnten Kastens sind entsprechend der Kontur der Dichtflächen der Verschlußplatten bzw. Dichtringe des Leitrohrs abgerundet. Dadurch werden minimale Spannungen an den Verschlußplatten und Dichtringen des Leitrohrs selbst sowie im Übergangsbereich zwischen Verschlußplatten und Dichtringen bei Pressung derselben gegen die Gehäusedichtsitze erreicht.

Um auch bei Ausfall der Druckmitteleinheit für die axiale Spreizung der Verschlußplatten eine ausreichende Abdichtung des Strömungsmittelkanals in Schließstellung des Schiebers sicherzustellen, kann vorgesehen sein, daß der Druckmittelraum zwischen den Dichtflächen der Verschlußplatten in Schließstellung des Schiebers mit der Druckseite des Gehäuses bzw. dessen Strömungsdurchgang verbindbar ist, so daß der erwähnte Druckmittelraum unter Systemdruck steht. Dies ist ein nicht zu unterschätzendes Sicherheitsmoment, wobei dazu natürlich nur die gasförmigen Bestandteile des Betriebsmediums verwendet werden. Während der Betätigung wird der Innendruck im fluiddicht verschlossenen Kasten abgesenkt, um eine leichtgängige Verschiebung des Absperrelements mit oder ohne Leitrohr zu erreichen. Sollten unvorhergesehene Undichtigkeiten auftreten, wird durch Einleitung von Spülmedium, insbesondere Spüldampf in das Schiebergehäuse vermieden, daß Betriebsmedium in das Schiebergehäuse eindringt und die Armatur innerhalb des Gehäuses verschmutzt.

Nachstehend werden Ausführungsbeispiele eines erfindungsgemäß ausgebildeten Plattenschiebers anhand der beigefügten Zeichnung näher erläutert. Es zeigen:
- Fig. 1: eine erste Ausführungsform eines Plattenschiebers mit Leitrohr im Querschnitt;
- Fig. 2: die Ausführungsform gemäß Fig. 1 teilweise in Seitenansicht, teilweise im Längsschnitt;
- Fig. 3: eine zweite Ausführungsform eines Schiebers mit Leitrohr im Querschnitt;
- Fig. 4: die Ausführungsform gemäß Fig. 3 im Längsschnitt;
- Fig. 5: einen Teil der Ausführungsform gemäß Fig. 3 in vergrößertem Maßstab.

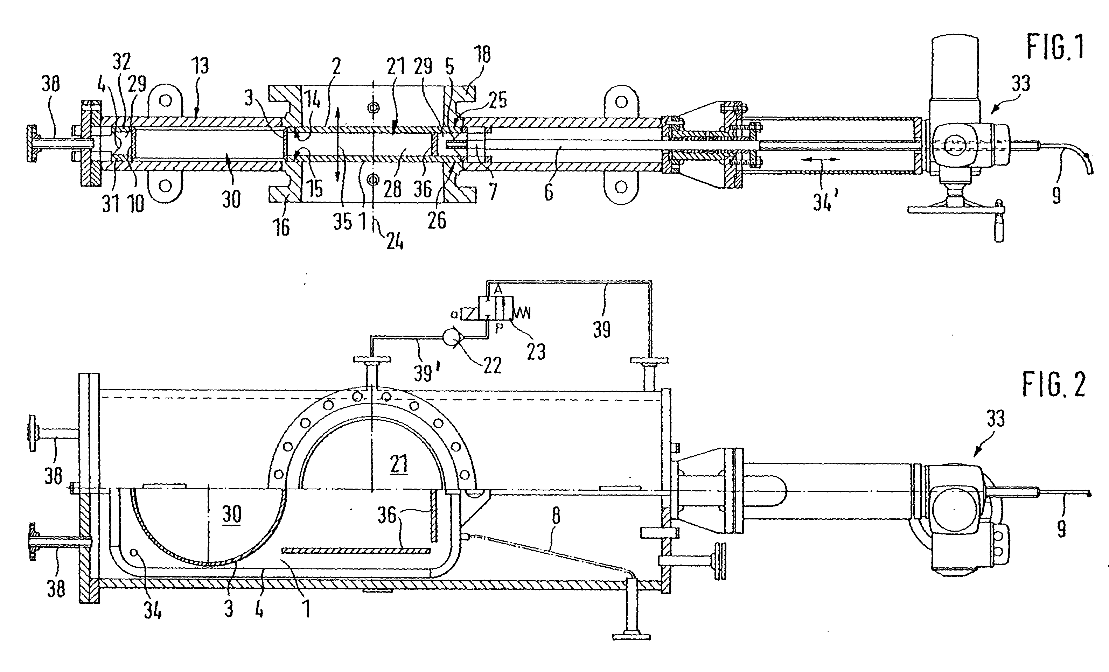

Der in den Figuren 1 und 2 dargestellte Plattenschieber umfaßt ein mit einem Eintrittsstutzen 16 und einem Austrittsstutzen 18 aufweisendes Gehäuse 13, in dem ein zwei Verschlußplatten 1 und 2 enthaltender Schieber 21 angeordnet ist. Dieser ist quer zu den auf einer gemeinsamen Achse 24 angeordneten Stutzen 16, 18 zwischen zwei einander gegenüberstehenden Sitzflächen 14, 15 bewegbar. Zusätzlich ist ein Leitrohr 30 vorgesehen, das zwei Dichtringe 31 und 32 aufweist, die in der hier nicht dargestellten Offenstellung des Schiebers unter der Einwirkung von Druckmittel gegen die Dichtsitze 14, 15 des Schiebergehäuses 13 preßbar sind. Die Dichtringe 31, 32 sind jeweils integrale Bestandteile der beiden Verschlußplatten 1 und 2. In der Schließstellung des Schiebers 21, die in den Fig. 1 und 2 dargestellt ist, sind die beiden Verschlußplatten 1 und 2 bzw. deren Ring-Dichtflächen 25, 26 ebenfalls unter der Einwirkung eines zwischen den beiden Verschlußplatten 1 und 2 einleitbaren Druckmittels gegen die jeweils zugeordneten Gehäuse-Sitzflächen 14, 15 fluiddicht anpreßbar. Während der Betätigung des Schiebers steht dieser unter einem geringeren Innendruck als in den beiden Endstellungen. Der Raum 28, 29 zwischen den beiden Verschlußplatten 1, 2 sowie Dichtringen 31, 32 ist gegenüber der Umgebung durch einen sich längs des äußeren Umfangs erstreckenden Kompensator 4 einerseits und einen zwischen dem Durchgang 3 des Leitrohrs 30 und der relativ dazu axialbeweglichen Einheit aus Verschlußplatte 2 und Dichtring 32 angeordneten Kompensator 10 andererseits abgedichtet. Der Kompensator 10 weist eine umlaufende und in Fig. 1 nicht näher dargestellte Dehn-Sicke auf, während der äußere Kompensator 4 durch einen wellig gebogenen, ein- oder mehrteiligen Blechstreifen mit einer sich über den Umfang erstreckenden Halbwelle gebildet ist, der längs seiner beiden Umfangsränder mit den beiden Verschlußplatten 1, 2 bzw. den einheitlich damit verbundenen Dichtringen 31, 32 fluiddicht verschweißt ist. In den vorerwähnten Raum 28, 29 ist Druckmittel einleitbar, und zwar entweder über eine gesonderte Druckmittelleitung 8 oder durch eine mit einem Schieberantrieb 33 wirkverbundene Hohlspindel 6. Der in den Raum 28, 29 mündende Abschnitt der Hohlspindel 6 ist mit der Bezugsziffer 5 gekennzeichnet. Eine Schlauchverbindung zwischen der Hohlspindel 6 und einem nicht näher dargestellten Druckmittelspeicher ist mit der Bezugsziffer 9 versehen. Die mechanische Verbindung zwischen den Verschlußplatten 1, 2 samt Dichtringen 31, 32 und der Hohlspindel 6 erfolgt über ein Zwischenstück 7. Die Platten 1 und 2 sind an diesem Zwischenstück 7 eingehängt, während die Hohlspindel 6 mit dem Zwischenstück 7 starr verbunden ist.

Durch eine auf die Hohlspindel 6 einwirkende und drehangetriebene Spindelmutter (nicht dargestellt) kann die Hohlspindel 6 axial hin- und herbewegt werden unter entsprechender Mitnahme des Schiebers 21 samt Leitrohr 30. Diese Hin- und Herbewegung ist mit dem Doppelpfeil 34' gekennzeichnet.

Des weiteren ist die axiale Spreizbewegung der beiden Verschlußplatten 1 und 2 unter Einwirkung eines in den Raum 28, 29 unter einem Druck höher als der Betriebsdruck eingeleiteten Druckmittels mit dem Doppelpfeil 35 angedeutet. Diese Spreizbewegung erfolgt vorzugsweise mit einer elastischen Rückstellung der Kompensatoren 4, 10, so daß nach Druckreduzierung im Raum 28, 29 stets eine minimale Anpressung der Dichtflächen der beiden Verschlußplatten bzw. Dichtringe des Leitrohres an den Gehäusedichtsitzen gewährleistet ist. Dementsprechend läßt sich bei reduziertem Innendruck der Schieber mit minimaler Reibung an den Gehäusedichtsitzen 14, 15 in Richtung des Doppelpfeiles 34' verschieben.

Im Zentralbereich der einander zugewandten Seiten der beiden Verschlußplatten 1 und 2 sind Versteifungselemente in Form von Distanzstegen 36 wirksam. Diese Distanzstege sind entsprechend Fig. 2 im rechten Winkel zueinander radial innerhalb der umlaufenden Ring-Dichtflächen 25, 26 der beiden Verschlußplatten 1 und 2 angeordnet, und zwar mit jeweils nur einer Verschlußplatte, nämlich entsprechend Fig. 1 mit der Verschlußplatte 1 verschweißt. Im Übergangsbereich zwischen den beiden Schieberplatten 1 und 2 einerseits und den Dichtringen 31, 32 andererseits ist kein Distanzsteg 36 erforderlich. Bei größerer Dimensionierung sollte jedoch auch in diesem Übergangsbereich ein Distanzsteg 36 angeordnet werden. Diese Distanzstege 36 dienen auch als Hubbegrenzung, d. h. bestimmen die maximale Annäherung der beiden Verschlußplatten 1, 2 bzw. der damit integral verbundenen Dichtringe 31, 32 zum Zwecke der translatorischen Bewegung des Schiebers in Richtung des Doppelpfeiles 34'.

Im äußeren Eckbereich des Leitrohrs 30 sind statt der Distanzstege 36 Distanzstäbe 34 vorgesehen, die jeweils nur mit einem der beiden Dichtringe fest verbunden, insbesondere verschweißt ist. Bezüglich der Anordnung der Distanzstäbe 34 wird auf Fig. 2 verwiesen.

Um das Gehäuse 13 außerhalb des Schiebers, insbesondere außerhalb des Kompensators 4 sauberzuhalten, kann in das Gehäuse 13 Spülmedium, insbesondere Spüldampf eingeleitet werden. Die Abführung desselben erfolgt über einen seitlich angebrachten Stutzen 38. Dabei hat sich gezeigt, daß selbst bei Spülung im geschlossenen Zustand mit gleichem Spüldruck und Innendruck am Leitrohr keine Dichtkraftabsenkung auf Null eintritt, weil immer noch die Differenz zwischen niedrigerem Betriebsdruck und höherem Innendruck auf der dem mittleren Dichtdurchmesser entsprechenden Fläche zur Verfügung steht. In Offenstellung des Schiebers ist im selben Betriebszustand die Ringfläche zwischen Gehäusesitz-Innendurchmesser und mittlerem Dichtdurchmesser bei gleichem Differenzdruck nutzbar. Dementsprechend muß auch die Auslegung des dargestellten Plattenschiebers erfolgen. Ein angepaßtes Spülregime mit niedrigerem Spüldruck unterstützt das Dichthalten.

Bei Bedarf, insbesondere bei zu starkem Abfall des Innendrucks wird zur Erzielung einer ausreichenden Dichtigkeit der Armatur in Schließstellung des Schiebers der Raum 28, 29 vorzugsweise noch mit der Druckseite des Betriebsmediums verbunden. Über zwei Leitungen 39', in welchen jeweils ein Rückschlagventil 22 angeordnet sind, kann der Innendruck im Schiebergehäuse 13 dem Minimaldruck im System angepaßt werden. Die beiden Leitungen 39' sind vor dem Eintritt in das Schiebergehäuse 13 zu einer gemeinsamen Leitung 39 zusammengefaßt, in der sich ein Zwei-Wege-Magnetventil 23 befindet.

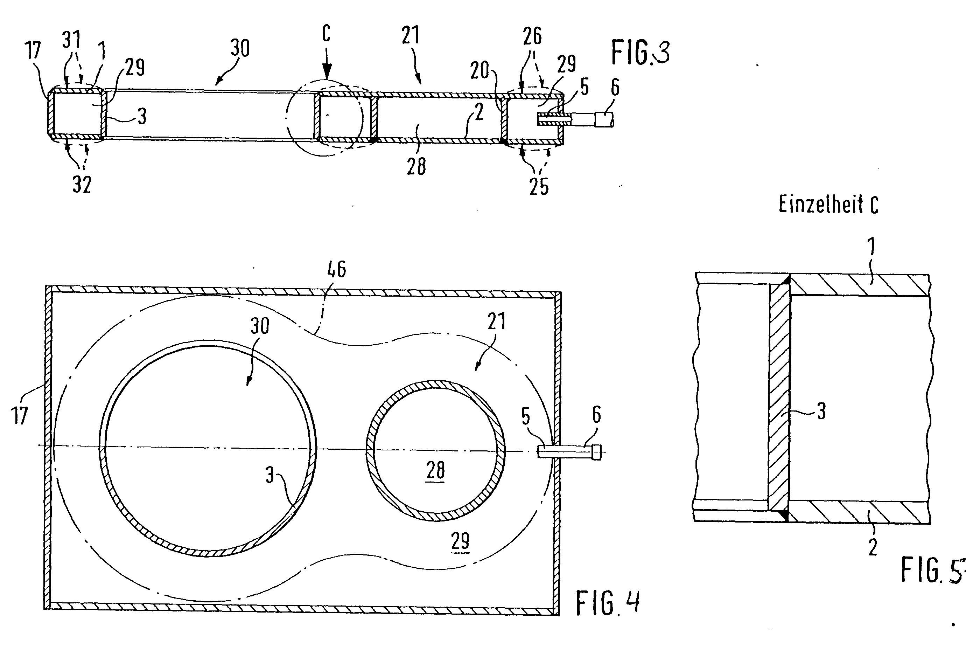

Bei der Ausführungsform nach den Fig. 3 bis 5 dient als Versteifungselement zwischen den beiden Verschlußplatten 1 und 2 ein sich radial innerhalb der umlaufenden Dichtflächen 25, 26 erstreckender Versteifungsring 20, der an der Innenseite der Verschlußplatten 1 und 2 angeschweißt ist. Die Beabstandung der beiden Verschlußplatten 1 und 2 samt integrierter Dichtringe 31, 32 des Leitrohres 30 erfolgt durch einen äußeren Rechteckrahmen 17, der mit den Verschlußplatten 1 und 2 einschließlich integrierter Dichtringe 31, 32 verschweißt ist.

Es sei noch erwähnt, daß der Rechteckrahmen 17 aus Blechstreifen besteht. Dieser Blechrahmen hat den Vorteil, daß der Durchgang 3 nicht mehr gasdicht gegenüber dem Betriebsmedium abgedichtet werden muß. Außerdem kann der Kompensator 4 entfallen.

Wie bereits erwähnt ist bei der Ausführungsform gemäß den Fig. 3 bis 5 ein Versteifungsring 20 an den Innenseiten beider Verschlußplatten 1 und 2 angeschweißt. Das gleiche gilt für den rohrförmigen Durchgang 3, wie Fig. 5 erkennen läßt. Dementsprechend ist der durch den Versteifungsring 20 abgeschlossene Zentralraum 28 zwischen den beiden Verschlußplatten 1, 2 abgedichtet. Das durch die Hohlspindel 6 eingeleitete Druckmittel wird nur im übrigen Raum 29 zwischen den Verschlußplatten 1 und integral damit verbundenen Dichtringen 31, 32 wirksam, und zwar derart, daß die Ring-Dichtflächen 25, 26 der Verschlußplatten 1, 2 bzw. die Dichtringe 31, 32 des Leitrohres 30 axial nach außen gewölbt werden, so wie dies in Fig. 3 mit gestrichelten Linien angedeutet ist. Bei dieser Ausführungsform entfallen Kompensatoren. Außerdem stellt sie eine äußerst einfache Schweißkonstruktion dar, die aus relativ dünnwandigen Platten hergestellt werden kann.

Um Spannungen am Rand des Übergangsbereiches zwischen Leitrohr und Absperrteil sowie im Eckbereich der beschriebenen Kastenkonstruktionen zu vermeiden, ist die Umfangskontur des aus den Platten 1, 2 bzw. Dichtringen 31, 32 sowie dem Rechteckrahmen 17 gestalteten Schieber-Kastens entsprechend der Kontur der Ring-Dichtflächen 25, 26 sowie Dichtringe 31, 32 gestaltet. Diese bevorzugte Umfangskontur ist in Fig. 10 strichpunktiert (brillenartige Umrißlinie 46) angedeutet.

### Bezugszeichenliste

- 1: Verschlußplatte
- 2: Verschlußplatte
- 3: Durchgangs
- 4: Kompensator
- 5: Hohlspindelabschnitt
- 6: Hohlspindel
- 7: Zwischenstück
- 8: Leitung
- 9: Schlauchleitung
- 10: Kompensator
- 13: Gehäuse
- 14: Sitzfläche
- 15: Sitzfläche
- 16: Eintrittsstutzen
- 17: Rechteckrahmen
- 18: Austrittsstutzen
- 20: Versteifungsring
- 21: Schieber
- 22: Rückschlagventil
- 23: Magnetventil
- 24: Achse
- 25: Dichtfläche
- 26: Dichtfläche
- 28: Raum
- 29: Raum (Ringraum)
- 30: Leitrohr
- 31: Dichtring
- 32: Dichtring
- 33: Schieberantrieb
- 34: Distanzstäbe
- 34': Doppelpfeil
- 35: Doppelpfeil
- 36: Distanzstege
- 38: Stutzen
- 39: Leitung
- 39': Leitung

## Patentansprüche

1. Plattenschieber mit einem einen Eintritts- und einen Austrittsstutzen (16, 18) aufweisenden Gehäuse (13), in dem ein zwei Verschlußplatten (1, 2) umfassender Schieber (21) angeordnet ist, der quer zu den auf einer gemeinsamen Achse (24) angeordneten Stutzen (16, 18) zwischen zwei einander gegenüberliegenden Sitzflächen (14, 15) bewegbar ist, wobei die Verschlußplatten (1, 2) den Sitzflächen (14, 15) des Gehäuses (13) zugeordnete Dichtflächen (25, 26) definieren, die Teil eines durch diese sowie eine zwischen den Verschlußplatten (1, 2) angeordnete äußere Begrenzungswand (46) einerseits und einen zentralen Versteifungsring (20) andererseits begrenzten Ringraums (29) sind derart, daß bei Einleitung von Druckmittel in den erwähnten Ringraum (29) die Dichtflächen (25, 26) der beiden Verschlußplatten (1, 2) axial nach außen gewölbt werden unter dichter Anlage an die zugeordneten Sitzflächen (14, 15) des Gehäuses (13) in Schließstellung des Schiebers (21),
**dadurch gekennzeichnet,** daß
die Verschlußplatten (1, 2) zusätzlich ein Leitrohr (30) umfassen, wobei die sich um das Leitrohr (30) herum erstreckenden Randbereiche der Verschlußplatten (1, 2) in Offenstellung des Schiebers (21) mit den Sitzflächen (14, 15) des Gehäuses (13) korrespondierende Dichtringe (31, 32) definieren derart, daß diese unter Einwirkung von Druckmittel ebenfalls axial nach außen gewölbt und gegen die Dichtsitze (14, 15) des Gehäuses (13) gepreßt werden, wobei der den Dichtringen (14, 15) zugeordnete Druckmittelraum mit dem den Dichtflächen (25, 26) zugeordneten Ringraum (29) fluidverbunden ist, und wobei die äußere Begrenzungswand (46) sich auch um den den LeitrohrDichtringen (31, 32) zugeordneten Druckmittelraum herumerstreckt und insgesamt eine brillenartige Umfangskontur aufweist.

2. Plattenschieber nach Anspruch 1,
**dadurch gekennzeichnet**, daß
der Druckmittelraum (29) in Schließstellung des Schiebers mit der Druckseite des Gehäuses bzw. dessen Strömungsdurchgang verbindbar ist, so daß der erwähnte Druckmittelraum (29) unter Systemdruck bringbar ist.

3. Plattenschieber nach Anspruch 1,
**dadurch gekennzeichnet**, daß
der Innenraum des Schiebergehäuses (13) über eine ein in Richtung zum Betriebsmedium hin öffenbares Rückschlagventil (22) aufweisende Leitung (39') mit dem Betriebsmedium wahlweise an der einen oder anderen Seite des Schiebers, insbesondere mit dem Eintritts (16)- oder Austritts (18)-Stutzen verbindbar ist, wobei die beiden Leitungen (39') vor dem Eintritt in das Schiebergehäuse (13) zu einer gemeinsamen Leitung (39) mit einem Zwei-Wege-Schaltventil (23) zusammengefaßt sind.

## Claims

1. A parallel-slide gate valve with a housing (13) which comprises an inlet and an outlet socket (16, 18) and in which a slide (21) comprising two closure plates (1, 2) is arranged, the slide (21) being movable between two mutually opposed seating faces (14, 15) and transversely to the sockets (16, 18) arranged on a common axis (24), wherein the closure plates (1, 2) define sealing faces (25, 26) which are associated with the seating faces (14, 15) of the housing (13) and which are part of an annular space (29) bounded by the said sealing faces (25, 26) as well as by an outer boundary wall (46) arranged between the closure plates (1, 2) on the one hand and a central reinforcement ring (20) on the other hand, in such a way that when pressure medium is introduced into the said annular space (29) the sealing faces (25, 26) of the two closure plates (1, 2) are bulged axially outwards with close abutment against the associated seating faces (14, 15) of the housing (13) in the closed position of the slide (21), **characterized in that** the closure plates (1, 2) additionally comprise a guide tube (30), wherein the edge regions of the closure plates (1, 2) extending around the guide tube (30) define sealing rings (31, 32) corresponding to the seating faces (14, 15) of the housing (13) in the open position of the slide (21), in such a way that the said sealing rings (31, 32) are likewise bulged axially outwards and pressed against the sealing seats (14, 15) of the housing (13) under the action of pressure medium, wherein the pressure-medium space associated with the sealing rings (14, 15) is fluidically connected to the annular space (29) associated with the sealing faces (25, 26), and wherein the outer boundary wall (46) also extends around the pressure-medium space associated with the guide-tube sealing rings (31, 32) and as a whole has a peripheral contour in the manner of spectacles.

2. A parallel-slide gate valve according to Claim 1, **characterized in that** the pressure-medium space (29) can be connected to the pressure side of the housing or the flow passage thereof in the closed position of the slide, so that the said pressure-medium space (29) can be brought under system pressure.

3. A parallel-slide gate valve according to Claim 1, **characterized in that** the inner space of the slide housing (13) can be connected - by way of a line (39') comprising a non-return valve (22) which can be opened in the direction towards the operating medium - to the operating medium optionally on one or other side of the slide, and in particular to the inlet socket (16) or outlet socket (18), wherein the two lines (39') are joined together upstream of the inlet into the slide housing (13) to form a common line (39) with the two-way switching valve (23).

## Revendications

1. Robinet-vanne à sièges parallèles avec un corps (13) présentant une tubulure d'admission et une tubulure d'échappement (16, 18), dans lequel est disposé un robinet-vanne (21) comprenant deux opercules (1, 2), qui peut se déplacer entre deux portées de sièges (14, 15) mutuellement en vis-à-vis, dans le sens transversal par rapport aux tubulures (16, 18) disposées sur un axe commun (24), les opercules (1, 2) définissant des portées de joints (25, 26), associées aux portées de sièges (14, 15) du corps (13) et qui font partie d'un espace annulaire (29) délimité d'un côté par ces portées de joints, ainsi que par une paroi de délimitation externe (46) disposée entre les opercules (1, 2), et d'un autre côté par une frette centrale (20), de sorte que, lors de l'introduction d'agent sous pression dans l'espace annulaire mentionné (29), les portées de joints (25, 26) des deux opercules (1, 2) sont cintrées dans le sens axial vers l'extérieur avec un appui hermétique sur les portées de sièges (14, 15) associées du corps (13), en position de fermeture du robinet-vanne (21), **caractérisé en ce que** les opercules (1, 2) comportent en supplément un tube de guidage (30), les zones de bordure des opercules (1, 2) qui s'étendent autour du tube de guidage (30) définissant, en position d'ouverture du robinet-vanne (21), des bagues d'étanchéité (31, 32) correspondantes aux portées de sièges (14, 15) du corps (13) de sorte que ces bagues, sous l'effet d'agent sous pression, sont également cintrées dans le sens axial vers l'extérieur et pressées contre les sièges d'étanchéité (14, 15) du corps (13), l'espace d'agent sous pression, associé aux bagues d'étanchéité (14, 15), étant en liaison fluidique avec l'espace annulaire (29) associé aux portées de joints (25, 26), et la paroi de délimitation extérieure (46) s'étendant également autour de l'espace d'agent sous pression associé aux bagues d'étanchéité (31, 32) du tube de guidage et présentant dans l'ensemble un contour périphérique en forme de lunettes.

2. Robinet-vanne à sièges parallèles suivant la revendication 1, **caractérisé en ce que** l'espace d'agent sous pression (29) peut être relié au côté pression du corps et/ou au passage d'écoulement de ce dernier en position de fermeture du robinet-vanne, de sorte que l'espace d'agent sous pression (29) mentionné peut être amené sous la pression du système.

3. Robinet-vanne à sièges parallèles suivant la revendication 1, **caractérisé en ce que** l'espace interne du corps (13) du robinet-vanne peut être relié sélectivement au fluide de service, par l'intermédiaire d'une conduite (39') présentant un clapet anti-retour (22) pouvant s'ouvrir en direction du fluide de service, sur l'un ou sur l'autre côté du robinet-vanne, en particulier avec la tubulure d'admission (16) ou la tubulure d'échappement (18), les deux conduites (39') étant regroupées avant leur entrée dans le corps (13) du robinet-vanne en une conduite commune (39) avec une électrovanne à deux voies (23).
